# EUROPEAN PATENT APPLICATION

(11) **EP 4 484 135 A1**
(43) Date of publication of application: **01.01.2025**
(21) Application number: 24182874.8
(22) Date of filing: 18.06.2024
(51) Int. Cl.: B29C 65/18, B65B 51/16, B65B 51/26

(54) **SEALING DEVICE FOR PACKAGING MACHINE**

(30) Priority: 27.06.2023 IT 202300013311
(71) Applicant: P.F.M. S.p.A., 36036 Torrebelvicino (Vicenza) (IT)
(72) Inventor: PIANEGONDA, Luca, 36036 TORREBELVICINO (Vicenza) (IT)
(74) Representative: Sandri, Sandro

(57) **Abstract**

A sealing device (10) for a packaging machine comprises a containment body (20) extending prevalently along a first axis (Y), between a first end (20') and a second end (20"), and defines a housing volume (21) in which at least one heating element (30) is housable. Sealing elements are mechanically associated with said containment body (20) and configured to seal together edges of a film (F) for packaging that are arranged adjacent to or overlapping one another; wherein said sealing elements comprise a plurality of rolling elements (50) configured to be placed in contact with at least one of said edges to achieve a sealing by a rolling contact.

## Description

### Technical field

The present invention relates to a sealing device for a packaging machine, in particular a device intended to be mounted operationally and mechanically in a packaging machine, for example a horizontal and/or vertical type packaging machine, for achieving a sealing of a film, in particular in flexible polymeric material (e.g. polyethylene).

In general, therefore, the sealing device in question is intended to be advantageously used in the sector of the production and marketing of machines, plants, lines and automated systems for packaging and/or packing, for producing packages/wrappers with a flexible film and containing products of various kind, for example of a food and/or non-food type.

### Prior art

It is known in the technical sector of reference, i.e. in the sector of automated packaging machines, to use sealing devices/groups to seal the material of a package, for example a film made of polymeric material, around a product to be packaged.

As is known, packaging machines provide for wrapping the aforesaid product to be packaged with a flexible film and then for sealing and subsequently cutting said film around the product to make the package. More in detail, a packaging machine of known type typically comprises a frame configured to carry mounted thereon a film feeding group, e.g. a reel, a film dragging group configured to drag the flexible film in such a way as to unwind it from the reel on which it is wound, a forming group suitably shaped to give the moving film a substantially closed tubular shape, and at least one sealing group placed to intercept the film and operable to seal it.

Traditionally, sealing apparatuses for packaging machines comprise at least one support body, mechanically mounted movable on the machine frame, in particular towards and/or away from the film sealing zone, and configured to house at least one sealing element, commonly referred to in the technical jargon of the sector with the term "sealing bar".

This sealing bar is placed in contact with the film to be sealed, during the movement of the film itself to achieve a sealing, for example a longitudinal sealing along the sliding direction of the film.

In particular, this sealing operation takes place by creeping, i.e. by means of a creeping contact (i.e. of the sliding type) between the surface of the aforesaid sealing bar and the film to be sealed.

In other words, the film to be sealed is moved (e.g. along a vertical direction towards the ground) by the forming group, and during such movement it is intercepted by a sealing surface of the sealing bar. This generates frictional forces at an area where contact between the film and the bar occurs, which then results in tensions on the final sealing of the film.

In order to reduce these frictional forces and therefore these tensions in the sealing, it is known to use anti-friction materials (e.g. Teflon ^{®} or similar) which are deposited, at least partially, on the sealing surface of the sealing bar.

Therefore, it is evident that, the sealing device of known type so far briefly described has proved to be not without drawbacks in practice.

As mentioned above, the main drawback lies in the fact that the sealing device of known type achieves sealings on packages that are of poor quality and therefore with poor mechanical sealing of the final package. In fact, the known sealing apparatuses provide for a sealing by a creeping contact between the sealing bar and the flexible film. In particular, this creeping contact produces a frictional force such that it produces tensions that have an impact on the quality of the final sealing. This results in a sealing that is not very resistant mechanically, i.e. in a package that can be easily opened, for example, by an operator when handling the package itself, and in addition that is not very pleasant from an aesthetic point of view.

A further drawback lies in the fact that the sealing device of known type requires frequent maintenance interventions by a specialized operator. In fact, as mentioned above, the sliding contact between the film to be sealed and the sealing bar produces frictional forces on the intercepting surface between the film and the bar themselves, which result in tensions that can lead to frequent breakage/failure (e.g. tearing or the like) of the film.

This is reflected in the frequent shutdowns of the packaging machine on which the device is mounted. This results in a low overall production efficiency of the packaging machine (understood as the number of packages produced in the unit of time).

### Objects of the invention

The object of the present invention is to provide a sealing device for a packaging machine that makes it possible to obviate and remedy, at least in part, the drawbacks of the aforesaid prior art.

A further object of the present invention is to provide a sealing device for a packaging machine that guarantees a high degree of quality of the sealing of the flexible film making up the package. In particular, the object of the invention is to provide a sealing device that guarantees a mechanically resistant sealing, in such a way as to guarantee a high reliability of the final package produced, and at the same time to provide a package with precise and/or accurate sealings, with a high aesthetic degree.

A further object of the present invention is to provide a sealing device for a packaging machine that is structurally and functionally completely safe and reliable, in particular that obviates the need for long shutdown periods of the packaging machine on which it is installed.

A further object of the present invention is to provide a sealing device for a packaging machine that is able to guarantee the repeatability of the quality of the sealing for long periods of time and/or for a large number of sealing cycles, e.g. millions of cycles.

A further object of the present invention is to provide a sealing device for a packaging machine that is easily maintainable and/or inspectable, for example by a specialized operator.

A further object of the present invention is to provide a sealing device for a packaging machine that is economically advantageous, or at least economically competitive with the known traditional solutions commonly available on the market.

A further object of the present invention is to provide a sealing device for a packaging machine which is compact and/or small in size.

A further object of the present invention is to provide a sealing device for a packaging machine that is structurally resistant and functionally completely reliable;

A further object of the present invention is to provide a sealing device for a packaging machine that has an alternative and/or improved configuration, both in terms of construction and function, compared to the traditional known solutions.

A further object of the present invention is to provide a sealing device for a packaging machine that can be realized in a simple, fast and low-cost manner.

A further object of the present invention is to provide a sealing device for a packaging machine that is applicable and/or mountable to a packaging machine, in particular already present and available on the market, in a simple, fast and low-cost way.

### Summary

All the objects, both individually and in any combination thereof, and others that will result from the detailed and following description are reached, according to the invention, with a sealing device for a packaging machine having the characteristics indicated in independent claim 1.

In particular, the sealing device comprises a containment body configured to house sealing elements, heating and/or cooling elements associated with the sealing elements and detection and control elements, such as for example a temperature sensor, which are arranged to measure a temperature at the sealing elements.

More in detail, the aforesaid sealing elements comprise rolling bodies, in particular substantially cylindrical, rotatably connected to the containment body and configured to be placed in contact with at least two edges of a film to be sealed, in such a way as to achieve a rolling type contact (instead of a creeping type) between the aforesaid rolling bodies and the edges of film to be sealed.

The dependent claims define particularly advantageous configurations of the sealing device 10.

The present invention also relates to a packaging machine on which a device according to one of claims 1 to 12 is present. Such a packaging machine is described in claim 13.

### Brief description of the drawings

Further characteristics and advantages of the present invention will become more apparent from the indicative and thus non-limiting description of a preferred but not exclusive embodiment of a sealing device for a packaging machine, as schematically illustrated in the appended drawings, in which:
- figure 1 shows, according to a perspective view, a sealing device for a packaging machine according to one embodiment of the present invention;
- figure 2 shows, according to an exploded view, a portion of detail of the sealing device illustrated in figure 1;
- figure 3 shows, according to a further longitudinal sectional view, the sealing device illustrated in figure 1;
- figure 4 shows, according to a further longitudinal sectional view, the sealing device illustrated in figure 1;
- figure 5A shows, according to a perspective view, a sealing device according to a further embodiment of the invention;
- figure 5B shows, according to a further perspective view, the sealing device illustrated in figure 5A;
- figure 5C shows, according to an enlarged perspective view, a detail of the sealing device illustrated in figure 5B.

With reference to the drawings, they serve solely to illustrate embodiments of the invention with the aim of better clarifying, in combination with the description, the inventive principles on which the invention is based.

### Detailed description of the invention

With reference to the accompanying figures, a sealing device, subject-matter of the present invention, in particular intended to be mounted mechanically on a packaging machine, has been indicated as a whole with 10.

The term "packaging machine" shall therefore be understood to mean, within the meaning of this description, a machine or plant or any other production system, preferably an automated packaging system, suitable for making a package by means of multiple sealings of a packaging material. Therefore, in the detailed and following description, reference will be made to the term "machine" in a non-limiting manner.

In addition, the term "sealing device" shall be understood to mean, within the meaning of this patent, any device configured to make at least one sealing line on a packaging material such as that mentioned above.

The sealing device 10 subject-matter of the present invention can be installed in the aforesaid packaging machines, configured to insert a preset amount of product of various kind inside a package, in particular along a substantially vertical direction, i.e. starting from a first raised position with respect to the ground (loading position) towards a second lowered position with respect to the first raised position (packaging position) and proximal to the ground. In this way, a package is filled through a drop of the aforesaid amount of product as a result of the force of gravity.

The packaging machines just briefly described are commonly referred to as VFFS ("Vertical - Form - Fill - Seal") in the technical jargon of the sector.

However, the sealing device can also be advantageously mounted on horizontal type packaging machines called by the term HFFS ("Horizontal - Form - Fill - Seal") in the technical jargon of the sector, without however falling outside the scope of protection of the present invention.

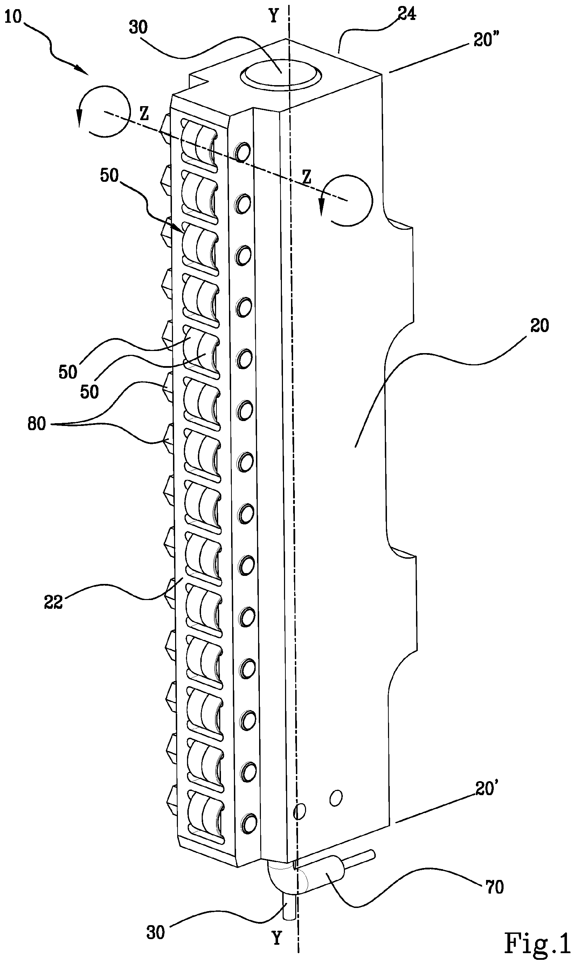

In accordance with an embodiment illustrated in figure 1, the sealing device 10 for a packaging machine comprises a containment body 20 extending prevalently along a first axis Y, between a first end 20' and a second end 20".

More specifically, the first axis Y is arranged substantially vertical, i.e. substantially orthogonal to the ground, and the containment body 20 has an elongated shape along said first axis Y.

In other words, the containment body 20 is shaped in such a way as to substantially define a bar or the like, and arranged in use substantially vertical, in accordance with the first axis Y.

According to one aspect of the invention, the containment body 20 has, in one, the first end 20' arranged at a raised position of the containment body 20, and the second end 20" arranged at a lowered position with respect to the first end 20".

According to one aspect of the invention, the containment body 20 defines a preferably substantially prismatic shape comprising at least one operating face 22 (introduced and described in more detail below) which is turned, in use, towards the edges of film F to be sealed, and at least one rest face 24 arranged counter-faced to the operating face 22.

In other words, the containment body 20 has a shape of a section thereof orthogonal to the first axis Y that is substantially rectangular or square. Preferably, the containment body 20 is made of a metallic material, in particular steel, such as for example stainless steel.

Advantageously, the realized containment body 20 has optimal characteristics of thermal conductivity and corrosion resistance.

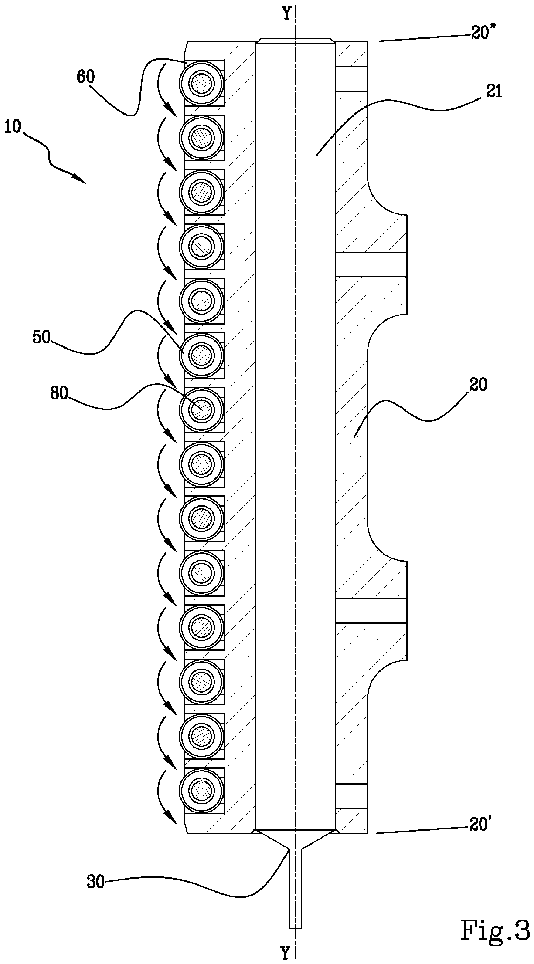

As illustrated in figure 3, the containment body 20 defines a housing volume 21 in which heating elements 30 are housable.

More specifically, the housing volume 21 extends substantially along the first axis Y, in particular between the first end 20' and the second end 20". In other words, the housing volume 21 is such as to define a pass-through opening through the containment body 20.

According to the embodiment illustrated in figure 3, the housing volume 21 has a preferably substantially cylindrical shape, in particular the housing volume 21 defines a shape of a section thereof orthogonal to the axis Y that is substantially circular.

According to one aspect of the invention, the sealing device 10 further comprises sealing elements associated mechanically with the containment body 20 and configured to seal together edges of a film F for packaging which are arranged adjacent to or overlapping one another.

In particular, the sealing elements are arranged at the operating face 22.

As illustrated in figure 1, the sealing elements comprise a plurality of rolling elements 50, for example consisting of rollers or metal bearings, configured to be placed in contact with at least one of the edges to achieve a sealing by a rolling contact.

The sealing device 10 allows to achieve a sealing of the edges of film F of a high qualitative degree since the kind of the contact between the sealing elements, i.e. the rolling elements 50, and the edges of film F themselves is of a rolling type (i.e. a rolling contact between the aforesaid bodies) and not of a sliding type (i.e. creeping). This allows to obtain a reduction in the frictional force that develops at a contact portion between the aforesaid rolling elements 50 and the edges of film to be sealed, which results in a lower tension level on the sealed edges of film.

This leads to a uniform, homogeneous and therefore mechanically resistant final sealing, which results in a reliable final package.

In addition, the final sealing of the edges of film F is aesthetically pleasant to an end consumer of the packaged product.

In accordance with the embodiment illustrated in the accompanying figures, each rolling element 50 of the plurality of rolling elements 50 is rotatably mounted on the containment body 20 in such a way as to protrude from the containment body 20, and configured to rotate around a second axis Z that is transverse to the first axis Y to enable a rolling contact with the edges of film F to be sealed.

Preferably, the second axis Z is arranged perpendicular to the first axis Y.

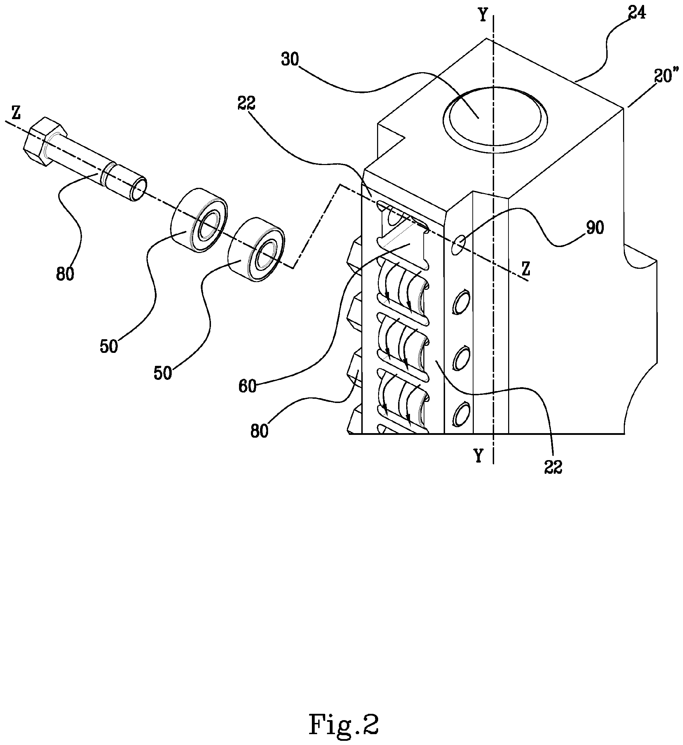

As illustrated in figure 2, the containment body 20 defines a plurality of seats 60 each arranged on the operating face 22 of the body 20 and substantially aligned to the first axis Y, wherein each seat 60 is configured to house at least one rolling element of the plurality of rolling elements 50.

In addition, each seat 60 is configured to receive (or house) at least two rolling elements 50 of the plurality of rolling elements 50 arranged alongside one another along the second axis Z (see figure 1-2).

As illustrated in the figures, the operating face 22 is substantially flat, and each seat 60 of the plurality of seats 60 is arranged in succession along the first axis Y.

According to one aspect of the invention, in particular illustrated in figure 1, each seat 60 of the plurality of seats 60 is uniformly spaced between the first end 20' and the second end 20".

According to one aspect of the invention, the plurality of seats 60 is arranged substantially in the centreline of the operating face 21, i.e. substantially in the centreline with respect to the first axis Y. Preferably, the operating face 22 is substantially flat.

As illustrated in figure 2, each seat 60 has a preferably substantially square or rectangular shape.

According to a particularly advantageous embodiment of the invention, each seat 60 of the plurality of seats 60 receives a pair of rolling elements 50, in particular arranged substantially in contact with each other at a face thereof.

According to embodiments not illustrated in the accompanying figures, each seat 60 of the plurality of seats is configured to house only one rolling element 50, or three or more rolling elements 50.

Advantageously, by juxtaposing two or more rolling elements 50, the sealed portion of the edges of film F is greater, giving the final sealing greater strength and sturdiness.

According to one aspect of the invention, as illustrated in detail in figure 2, the rolling elements 50 have a substantially cylindrical shape, in particular of the annular type.

More in detail, each rolling element 50 of the plurality of rolling elements 50 comprises a first ring, a second ring arranged housed and rotatably coupled to the first ring by a plurality of balls, arranged interposed between the first ring and the second ring.

In this way, when the second ring is mechanically keyed onto a support element (e.g. a pin or the like, as described in more detail below), the first ring is free to rotate about the second axis Z by means of the ball groove. In other words, as illustrated in the accompanying figures, each rolling element 50 is advantageously constituted by a ball bearing.

Preferably, the ball bearings are of the radial type, preferably rigid and preferably with a single ball groove.

Preferably, the ball bearings are identical to each other.

According to one aspect of the invention, the ball bearings constituting the rolling elements 50 are configured to operate at an operating temperature equal to at least 220°C, preferably to operate at an operating temperature comprised between 250-350°C.

In other words, the ball bearings usable in the device 10 according to the present invention are bearings for high temperature applications, particularly suitable for operating in environments with operating temperatures such as those reported above.

Advantageously, the bearings have a long service life. This results in a reduced number of shutdowns/interruptions of the packaging machine to carry out maintenance interventions, and therefore a high duration over time of the sealing device 10.

According to one aspect of the invention, illustrated in detail in figure 2, the sealing device 10 comprises support elements 80 mounted mechanically on the containment body 20, and each associated mechanically with a corresponding seat 60.

In other words, the number of support elements 80 corresponds to the number of seats 60.

More in detail, the containment body 20 defines a plurality of openings 90, in particular holes, each associated with a corresponding seat 60 of the plurality of seats 60.

This plurality of openings 90 is made on a face substantially orthogonal to the operating face 22, and in particular each opening 90 is made along respective axes that are substantially parallel to the second axis Z.

In other words, each opening 90 defines a substantially circular hole and having its own geometric axis substantially orthogonal to the aforesaid face on which said hole 90 is made, i.e. substantially orthogonal to the first axis Y and substantially parallel to the second axis Z.

Preferably, each opening 90 passes through each seat 60 and therefore through the containment body 20.

In this way, each support element 80 is coupled mechanically with a respective opening 90, and in particular said support element 80 is configured to couple mechanically with at least one rolling element 50 (preferably a pair of rolling elements 50) as illustrated in detail in the accompanying figure 2.

In other words, operationally, a pair of rolling elements 50 is housed (for example manually by a specialized operator) in each seat 60, and subsequently a support element 80 is inserted (for example manually by a specialized operator) into a corresponding opening 90 (i.e. a hole) belonging to the corresponding seat 60 and simultaneously coupled to the pair of rolling elements 50 at the second ring (i.e. the inner ring).

In this way, each rolling element (e.g. ball bearing) 50 is mechanically keyed, i.e. coupled by interference, at the second ring on the support element 80, while the first ring is free to rotate.

According to one aspect of the invention, the support elements 80 comprise threaded elements, in particular screws or the like, and are preferably identical to each other.

According to one aspect of the invention, the support elements 80 comprise screws preferably of the partially threaded type.

According to one aspect of the invention, each support element 80 is mechanically blocked rotatingly about the second axis Z when inserted in a corresponding hole 90.

In accordance with one embodiment not illustrated in the accompanying figures, the sealing device 10 comprises presser elements associated mechanically with the containment body 20, and configured to exert a force pressing along a direction substantially orthogonal to the first axis Y towards the edges of film F to be sealed.

More in detail, these presser elements are connected mechanically to the containment body 20 and arranged at a rest face 24 substantially counter-faced to the aforesaid working face 22 of the body 20 itself.

Preferably, the presser elements comprise a plurality of elastic elements, in particular mechanical springs.

Operationally, these presser elements allow a preset and adaptable pressing force to be applied to the containment body 20, and in particular to the operating face 22 housing the rolling elements 50. This results in a force pressing on the edges of film F to be sealed.

Advantageously, the sealing device 10 is able to seal together edges of film F having multiple thickness values. In other words, the greater the thickness of the edges of film F to be sealed is, and the greater the preset pressing force applied to the operating face 22 and therefore to the edges themselves will be.

According to one aspect of the invention not illustrated in the accompanying figures, the presser elements are associated mechanically with each rolling element 50.

Advantageously, it is possible to have a punctual control on each rolling element 50 of the force pressing on the edges of film F to be sealed.

In accordance with one embodiment illustrated in figure 3, the heating elements 30 comprise at least one electrical resistor housed in the housing volume 21, extending along the first axis Y and configured to heat at least part of the plurality of rolling elements 50.

More in detail, said at least one electrical resistor has a shape substantially similar to the housing volume 21, i.e. substantially cylindrical, and it preferably extends between the first end 20' and the second end 20".

In other words, said at least one electrical resistor covers substantially the entire extension of the containment body 20.

According to one aspect of the invention, the heating elements 30 comprise a plurality of electrical resistors aligned with each other along the first axis Y.

In other words, each electrical resistor of the plurality of electrical resistors is preferably arranged substantially stacked, i.e. one above the other, in the housing volume 21.

For example, according to one embodiment not illustrated in the accompanying figures, a first electrical resistor is arranged at the first end 20', a second electrical resistor is arranged at the second end 20", and a third electrical resistor is arranged in an intermediate position between the first electrical resistor and the second electrical resistor.

Preferably, the electrical resistors of the plurality of electrical resistors are identical to each other.

According to an advantageous embodiment of the invention, each electrical resistor of the aforesaid plurality of electrical resistors is adjustable independently of the other electrical resistors.

More specifically, each electrical resistor is supplied with electrical energy in a constant or differential manner. In this way, each electrical resistor develops, by means of the Joule effect, a substantially equal and preset amount of thermal, or differential (i.e. variable) energy between an electrical resistor and the next and/or previous adjacent one along the first axis Y. The intensity of electrical energy that supplies the plurality of electrical resistors can be correlated to the type of film F to be sealed.

More in detail, the intensity of electrical energy that supplies the aforesaid plurality of electrical resistors can be correlated to the kind of the film F to be sealed (e.g. polyethylene, polypropylene, and still others) and to the value of the thickness of the edges of the film F itself.

According to one aspect of the invention not illustrated in the accompanying figures, the sealing device 10 comprises at least one refrigerating element housed in the housing volume 22, preferably arranged at the first and/or second end 20', 20" and configured to cool a part of the plurality of rolling elements 50.

According to one aspect of the invention not illustrated in the accompanying figures, the sealing device 10 comprises a first electrical resistor arranged at the first end 20', a refrigerating element arranged at the second end 20", and a second electrical resistor arranged in an intermediate position between the first electrical resistor and the refrigerating element.

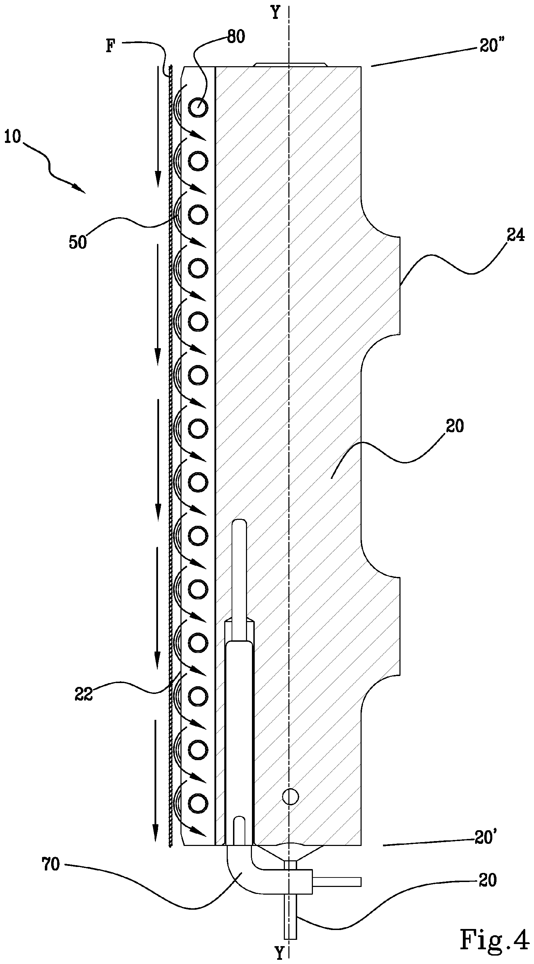

In accordance with the embodiment illustrated in figure 4, the sealing device 10 may comprise a sensor 70, in particular a temperature sensor, associated mechanically with the containment body 20 and configured to record an operating temperature in an area proximal to at least part of the plurality of rolling elements 50.

More in detail, the temperature sensor 70 is arranged oriented substantially parallel to the first axis Y, i.e. substantially vertically, and housed (at least partially) in the containment body 20.

Advantageously, the temperature sensor 70 allows a continuous monitoring of the value of the temperature reached at the aforesaid area.

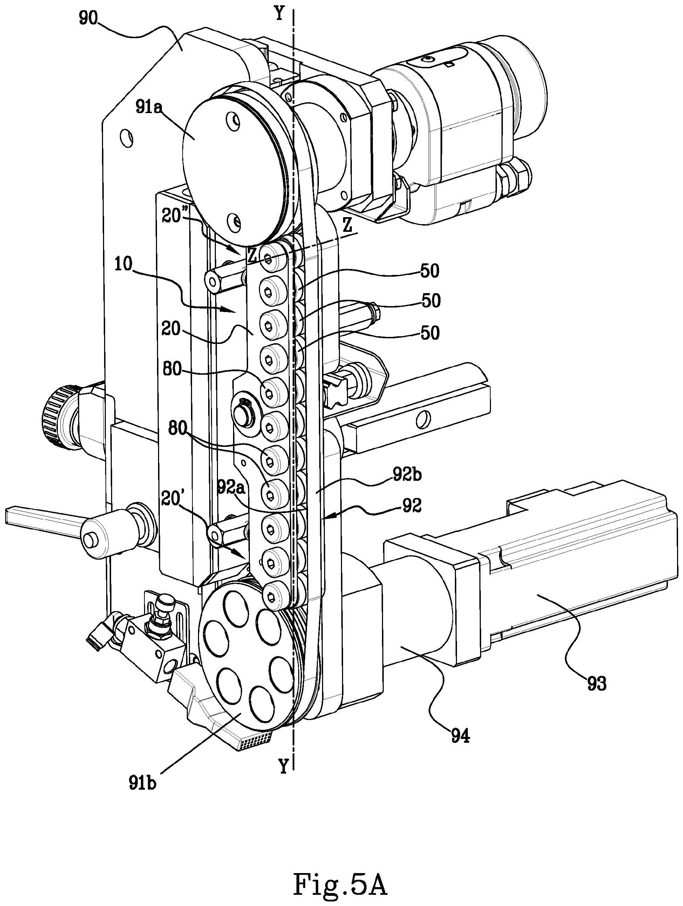

In accordance with one embodiment illustrated in figure 5A-5C, the sealing device 10 comprises a support frame 90, preferably a metal anchoring plate, to which the containment body 20 is operationally associated. In particular, the frame 90 is configured to be connected to a support structure of a packaging machine (introduced and described in more detail below).

The sealing device 10 further comprises a first and a second pulley 91a, 91b which are mounted on the frame 90, positioned proximal respectively to the first and second ends 20', 20" of the containment body 20, and each configured to rotate about respective rotation axes orthogonal to the first axis Y (and parallel to the second axis Z). Preferably, the first and second pulley 91a, 91b are of the trapezoidal type, i.e. they each have a shaped groove or slot, configured to receive a portion of a flexible element (described below).

Preferably, the sealing device 10 further comprises actuation means 93, such as for example an electric motor, in particular of the brushless type, configured to be connected mechanically to one of the first and second pulley 91a, 91b.

As illustrated in figure 5A-5B, the aforesaid actuation means is preferably connected, in particular coaxially, to the second pulley 91b which is therefore the driving pulley. As a result, the first pulley 91a is driven by the second pulley 91b by means of the flexible element.

Preferably, the sealing device 10 comprises a reduction mechanism 94, in particular of the planetary type, interposed and connected between the electric motor 93 and the second (driving) pulley 91b, and configured to modulate an angular speed and a torque transmitted by the electric motor 93 towards the second pulley 91b.

The sealing device 10 further comprises a flexible element 92 wound, at least partially, into a ring around the first and second pulley 91a, 91b, in particular housed in the aforesaid shaped seat, and movable around the first and second pulley 91a, 91b themselves.

In other words, the flexible element 92 is preferably similar to a belt, and realizes a closed path around the first and second pulley 91a, 91b.

According to one aspect of the invention, the flexible element 92 has a substantially planar shape, and in particular has a first surface 92a arranged proximal to the rolling elements 50 and a second surface 92b opposite to the first surface 92a and configured to abut against the aforesaid edges of a film F to seal them together.

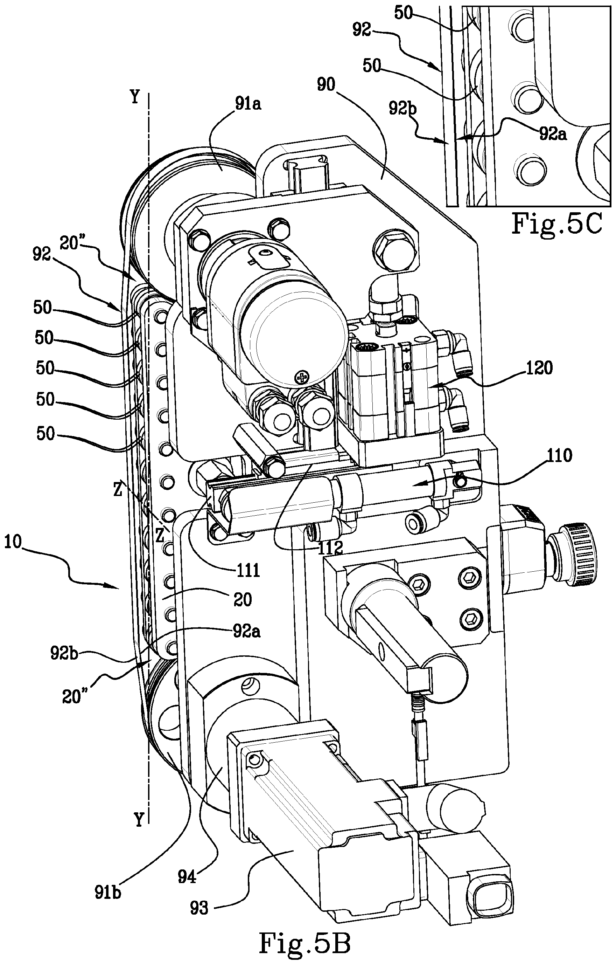

In other words, as shown in detail in figure 5C, the first surface 92a is positioned turned towards the rolling elements 50, and arranged at a predefined distance from said rolling elements 50, while the second surface 92b is counter-faced to the first surface 92a and configured to be placed in contact with the aforesaid edges of a packaging film F in such a way as to seal them together and achieve a substantially longitudinal sealing (i.e. substantially parallel to the first axis Y).

Preferably, the flexible element 92 has a substantially negligible thickness dimension, i.e. much smaller, with respect to its width and length dimensions.

As illustrated in figures 5A-5C, the flexible element 92 being interposed between the rolling elements 50 and the edges of film F to be sealed advantageously allows to reduce a value of a frictional force that is generated during a relative movement between the rolling elements 50 and the edges of film F themselves. This results in a final sealing of the aforesaid edges of film F that is qualitatively higher, i.e. substantially free of folds or wrinkles.

In other words, the flexible element 92 interposing itself between the rolling elements 50 and the edges of film F to be sealed, allows their indirect rolling contact, minimizing any frictional forces that are generated in corresponding contact zones between the aforesaid rolling elements 50 and the edges of film F.

According to one aspect of the invention, the flexible element 92 is made of a metallic material, preferably a copper alloy.

Advantageously, the flexible element 92 allows an effective transfer of an amount of heat coming from the rolling elements 50 towards the edges of the film F to seal them together.

In addition, the flexible element 92 is mechanically resistant and reliable over time, allowing to minimize any phenomena of breakage thereof and therefore stops of the operation of the device, with consequent costly maintenance interventions by specialized personnel reduced to a minimum. Advantageously, the flexible element 92 is simple, inexpensive, and easily available on the market.

According to one aspect of the invention, in particular illustrated in figure 5B, the sealing device 10 preferably comprises an adjustment member 110 connected to the containment body 20 and configured to move it along a direction orthogonal to the first axis Y, in particular along a sliding guide 111 coupled to a sliding block 112, in such a way as to vary a distance between the rolling elements 50 and the first face 92a of the flexible element 92. According to one aspect of the invention, in particular illustrated in figure 5B, the sealing device 10 comprises a tensioning member 120 operationally connected to the first pulley 91a and configured to move it substantially along the first axis Y in such a way as to vary a distance thereof with respect to the second pulley 91b, thus generating a tensioning of the flexible element 92.

Advantageously, the adjustment member 110 allows to modify the positioning, and therefore the distance, of the rolling elements 50 with respect to the flexible element 92, while the tensioning member 120 allows an adaptation and/or adjustment of a tension value of the flexible element 92. This results in greater operational flexibility of the sealing device 10, which is adaptable as a function of multiple working operating configurations.

Preferably, the adjustment member 110 and the tensioning member 120 respectively comprise an actuator, in particular of the pneumatic type.

In other words, the adjustment member 110 performs a linear rectilinear movement orthogonal to the first axis Y of the containment body 20 and therefore of the rolling elements 50, while the tensioning member 120 performs a movement of the tilting type of the first pulley 91a.

More in detail, the tilting movement is performed by means of a supporting plate 121 mounted on the first pulley 91a and, at one end thereof rotatably constrained to the frame 90 while at an opposite end connected to the tensioning member 120.

The adjustment member 110 and the tensioning member 120 are in themselves known to a person skilled in the art and therefore not further described.

The present invention also refers to a packaging machine (not illustrated in the accompanying figures).

In particular, the aforesaid packaging machine comprises a support structure extending prevalently along said first axis Y, and at least one sealing station connected mechanically to the support structure and, in addition, configured to be moved towards and/or away from the support structure itself, so as to move towards and/or away from edges of a film F to be sealed.

According to one aspect of the invention not illustrated in the accompanying figures, the sealing elements can be constituted by sliding bearings (commonly called by the term "bushings" in the technical jargon of the sector). These bushings have a structure completely similar to the aforesaid ball bearings, in particular they have a rolling contact between the outer ring and the edges of film F to be sealed, and a sliding contact between the outer ring and the inner ring of the bearing itself.

According to the present invention, the packaging machine comprises a sealing device 10 mounted mechanically on the at least one sealing station, which comprises one or more of the features described above.

## Claims

1. A sealing device (10) for a packaging machine comprising:
- a containment body (20) extending prevalently along a first axis (Y), between a first end (20') and a second end (20"), and defining a housing volume (21) in which at least one heating element (30) is housable;
- sealing elements associated mechanically with said containment body (20) and configured to seal together edges of a film (F) for packaging that are arranged adjacent to or overlapping one another;
**characterised in that** said sealing elements comprise a plurality of rolling elements (50) configured to be placed in contact with at least one of said edges to achieve a sealing by a rolling contact, wherein said containment body (20) defines a plurality of seats (60) each arranged on an operating face (22) of said body (20) and substantially aligned to said first axis (Y), each seat (60) being configured to house at least one rolling element of said plurality of rolling elements (50), and wherein each seat of said plurality of seats (60) is configured to receive at least two rolling elements (51) of said plurality of rolling elements (50) arranged alongside one another along a second axis (Z).

2. The sealing device (10) according to claim 1, **characterised in that** each rolling element of said plurality of rolling elements (50) is mounted rotatably on said containment body (20) so as to protrude from said containment body (20), and configured to rotate around the second axis (Z) that is transverse to said first axis (Y) to enable a rolling contact with said edges of film (F) to be sealed.

3. The device (10) according to claim 1 or 2, **characterised in that** said plurality of rolling elements (50) comprises bearings, preferably ball bearings.

4. The sealing device (10) according to claim 3, **characterised in that** said bearings (50) are configured to operate at an operating temperature at least equal to 220°C, preferably to operate at an operating temperature comprised between 250-350°C.

5. The sealing device (10) according to any one of the preceding claims, **characterised in that** it further comprises presser elements associated mechanically with said containment body (20), and configured to exert a force pressing along a direction substantially orthogonal to the first axis (Y) to said edges of film (F) to be sealed.

6. The sealing device (10) according to claim 5, wherein said presser elements are associated mechanically with each rolling element (50) of said plurality of rolling elements (50).

7. The sealing device (10) according to any one of the preceding claims, **characterised in that** said at least one heating element (30) comprises at least one electrical resistor housed in said housing volume (21) and extending along said first axis (Y) and configured to heat at least part of said plurality of rolling elements (50).

8. The sealing device (10) according to claim 7, **characterised in that** said at least one heating element (30) comprises a plurality of electrical resistors aligned with each other along said first axis (Y).

9. The device according to claim 8, **characterised in that** each electrical resistor of said plurality of electrical resistors is adjustable independently of the other electrical resistors.

10. The sealing device (10) according to one of the preceding claims, **characterised in that** it further comprises at least one refrigerating element housed in said housing volume (22), preferably arranged at said first and/or second end (20', 20") and configured to cool at least one part of said plurality of rolling elements (50).

11. The sealing device (10) according to claim 1, comprising:
- a support frame (90);
- a first and a second pulley (91a, 91b) mounted on said frame (90), positioned proximal respectively to said first and second ends (20', 20") of said containment body (20), and configured to rotate around respective rotation axes orthogonal to said first axis (Y);
- a flexible element (92) wound, at least partially, into a ring, around said first and second pulley (91a, 91b) and movable around said first and second pulley (91a, 91b);
wherein said flexible element (92) has a first surface (92a) arranged proximal to said rolling elements (50) and a second surface (92b) opposite to said first surface (92a) configured to abut against said edges of a film (F) to seal them together.

12. The sealing device (10) according to claim 11, wherein said flexible element (92) is made of a metallic material.

13. A packaging machine comprising:
- a support structure extending prevalently along said first axis (Y);
- at least one sealing station, connected mechanically to said support structure, and configured to be moved towards and/or away from said support structure so as to move towards and/or away from edges of a film (F) to be sealed;
**characterised in that** it comprises a sealing device (10) mounted mechanically on said at least one sealing station, according to one or more of claims 1 to 13.
